# EUROPEAN PATENT APPLICATION

(11) **EP 2 955 684 A1**
(43) Date of publication of application: **16.12.2015**
(21) Application number: 15171335.1
(22) Date of filing: 10.06.2015
(51) Int. Cl.: G06Q 30/06, G06Q 30/02

(54) **SYSTEM AND METHOD FOR PROVIDING PROPOSAL TO FURNISHING AND DECORATIONS BUYER**

(30) Priority: 11.06.2014 TW 103120184
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

Disclosure herein is related to a system and a method for providing proposal to furnishing and decorations buyer. The system provides a serving system (22). In the serving system (22), a style category can be determined when analyzing the elements selected by a user using a terminal device (21). Then an arrangement plan for the selected furnishing and decorations is proposed. In the method, a process begins as receiving selection data from the terminal device (21). The selection data is such a shopping list made by a product exhibit platform (23). The elements (231) in the list are referred to render a style category as compared to a database. At least one proposal, including furnishing arrangement, layout design, and combined photos, for the user's reference is therefore decided according to the style category.

## Description

### BACKGROUND

### 1. Technical Field

The present invention is related to a system and a method for providing proposal of furnishing decoration, in particular, to system and method for providing proposal of furnishing decoration according to the design style in compliance with user's preference.

### 2. Description of Related Art

The customer usually relies on his preference to purchase the furniture or decoration. In general, the appearance or practicability of an item is under consideration when the customer decides to buy the item. However, few people will consider how the item is arranged can be in harmony with the other furnishings. The one-sided wording of the sales staff may not be trusted since he may be required to give the insincere suggestion.

Furthermore, the customer may not consider the overall circumstance of the arrangement of the furnishings but the individual preference for every item when he buys multiple items at one time. Therefore, the customer may regret buying the item when he just places the individual item within a space.

The conventional technology does not provide any mechanism of timely and effectively giving any suggestion to conduct the decoration when the customer purchases one single item or multiple items. The conventional technology makes the customer regretting to buy the items and seeking return the item when he did not make any overall design.

### SUMMARY

Disclosure herein is related to a method and a system for providing proposal of furnishing decoration since the conventional technology is lack of effective way to give suggestion of buying furnishing in light of overall arrangement. In the method, the system instantly provides a proposal of decoration when the customer makes selection of buying one or more furnishings. The proposal may include the shopping advice along with other furnishings. The method allows the customer to place an order based on a suitable advice for avoiding unnecessary regret or returning goods.

According to one of the embodiments in the disclosure, in the method for providing the proposal of furnishing decoration, the system receives a selection signal made by a terminal device via network or a specific channel. The selection signal is such as a user using a terminal device to select one or more elements. A list is therefore created. According to this list, the system inquires a database depending on the selection in the list. One or more matched elements can be obtained instantly. At least one style type may be determined according to one or in combination of the elements. Based on the determination, at least one proposal can be determined. The proposal includes single or in combination of the suggestion of decoration, arrangement, and a composite image. The content of proposal is then transmitted to the terminal device over the network or any specific communication channel.

When the user selects one or more elements using the terminal device, a shopping list or a preference list is created. The every element is tagged with a proprietary identifier. The system may determine a style type directed to the shopping list or preference list by integrating the identifiers for the elements in the list. The style type is close to the user's preference. The system may further recommend other elements to the user based on the consistent style type. The proposal having the advice of decoration, arrangement, and the composite image may further include a diagram showing the arrangement of the elements and descriptive text.

In the embodiment of the system for implementing the method for providing proposal of furnishing decoration, the system has a goods exhibition platform providing a plurality of elements and their data. The system shows the elements for the user to make selection using the terminal device over network. The shopping list or preference list is then created. The system may provide a serving system to determine the style type in compliance with the elements selected by the user using the terminal device.

The serving system includes a communication module, a database module, and a data processing module. The communication module is provided for the terminal device to access the serving system. The serving system is able to get the selection signal made by the terminal device. The database module records a variety of data relating to the elements, styles, and the retailers. The data in the database is used to be reference for comparison. The data process module of the serving system is used to process the selection signal transmitted from the terminal device. The serving system therefore receives the selection signal carrying the message of selecting one or more elements. The combination of the elements selected by the user may be used to determine at least one style type. Based on the style type, the system sets forth a proposal of decoration, arrangement, and even a composite image to be reference for the terminal device.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

Fig. 1 shows a schematic diagram of the system for providing furnishing decoration in one embodiment of the present invention;
Fig. 2 shows a functional diagram of the system for providing proposal of furnishing decoration in one embodiment of the present invention;
Fig. 3 schematically shows the system for providing proposal of furnishing decoration having the decoration, arrangement, composite image in one embodiment of the present invention;
Fig. 4 shows a flow chart depicting a method for providing the proposal of the furnishing decoration in one embodiment of the present invention;
Fig. 5 shows a flow chart depicting the method in one further embodiment of the present invention.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

The present invention is generally related to a system and a method for providing proposal of furnishing decoration. The system renders a cloud-based service which allows the users to obtain proposals with respect to their preferred furnishing decoration via the specific connection. The system further provides shopping advice in accordance with the users' preferences. The users may thereby get helps.

The system provides a serving system used to receive the information relating to the user's selection concerning the various furnishing elements over network or other ways. From the selection signal made by the terminal device, the user's preferred style can be determined through analysis performed by the system.

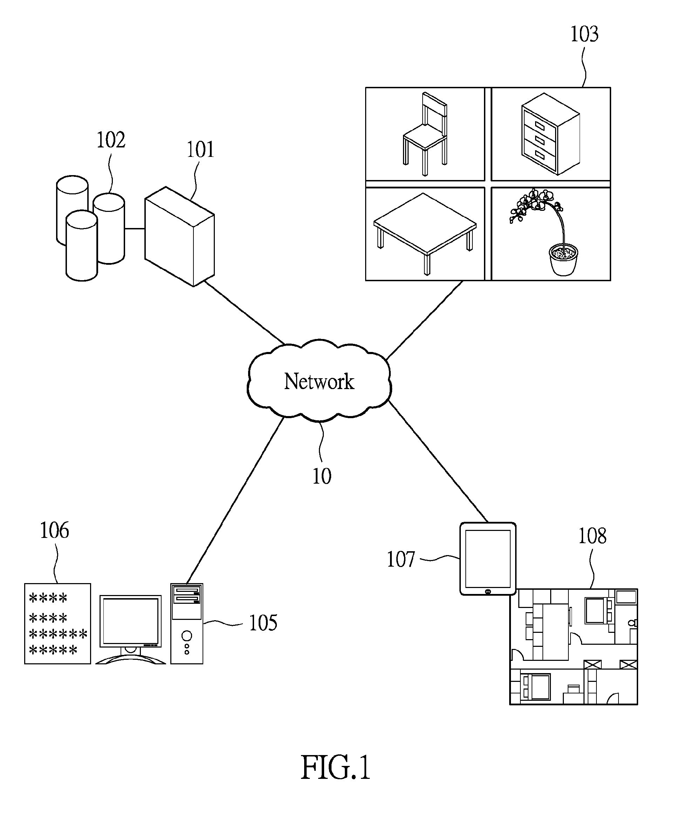

Then the personalized proposal of the furnishing decoration can be produced. Fig. 1 shows a schematic diagram depicting the system in accordance with the present invention.

The diagram schematically shows the interconnected parties over a network 10 that form the system for providing proposal of furnishing decoration. The system has a serving system 101 which renders a service center for providing the proposal based on an overall requirement. The serving system 101 provides a user interface for a user to inquire the system by his computer. The inquiry is used to find out the proposal from the serving system 101. The serving system 101 has a database 102. The database 102 records a variety of furnishing elements, the descriptions of elements, the introduction of retailers, the indexes for elements, the various style types with respect to the various combinations of elements, and the flexible and programmable proposals corresponding to the variety of style types. The proposal is one or in combination of advice of decoration, arrangement, and a composite image.

One end of the serving system 101 is connected with the system of retailer 103. Alternatively, the serving system 101 may render a shopping platform for the retailer 103 to register the furnishing elements. The furnishing elements registered in the shopping platform are the goods sold or recommended by the retailer 101. The retailer 103 may attach the description, category, and introduction to the designer with respect to every element in registration. The registered information relating to the element allows the serving system 101 to obtain information of the element. Therefore, the serving system 101 can determine the style type as categorizing the content. The designers may have their platforms which allow the designers to register data relating to their design styles. The design style includes a specific design form in combination of elements. The system provides the terminal devices 105, 107 to connect with the serving system over network, including acquiring the proposals 106, 108.

For example, the user may uses a mobile application program, e.g. APP installed in the terminal devices 105, 107, a web browser, or any related software to enter the serving system 101. The serving system 101 initiates a user interface provided for the users to select the variety of goods. The user interface also allows the user to place an order. A shopping list or a preference list is therefore created when the user selects one or more furnishing elements. The list recording the elements, with their identifiers, is transmitted to the serving system 101. The serving system 101 finds out a combination of furnishings or style type close to one or more designers as comparing with a database 102 using the element identifiers. After that, a customized proposal for providing furnishing decoration is produced.

In one further embodiment, the user may operate his terminal device 105 or 107 using software to get information of furnishing element when the user visits stores or shops. For example, the information may be coded in a QR code, and the terminal device uses a program to scan the bar code on the element. The bar code allows the terminal device to get information relating to the furnishing element, or URL relating to the furnishing element. The information is such as image, descriptive text, retailer, and/or designer associated with the furnishing element.

Furthermore, a kind of electronic tag is an acceptable form allowing the user to have the information relating to the elements. Every furnishing element has its own identifier provided for the user using terminal device to scan or read for acquiring further information concerning the interested furnishing element. The program executed in the terminal device 105 or 107 transmits the identifier to the serving system 101. A shopping list or preference list is created in the serving system 101. The serving system 101 then analyzes the combination of elements to find out a matched style type or a style type close to the analysis. Therefore, one or more proposals for the decoration, arrangement, and/or composite image are produced.

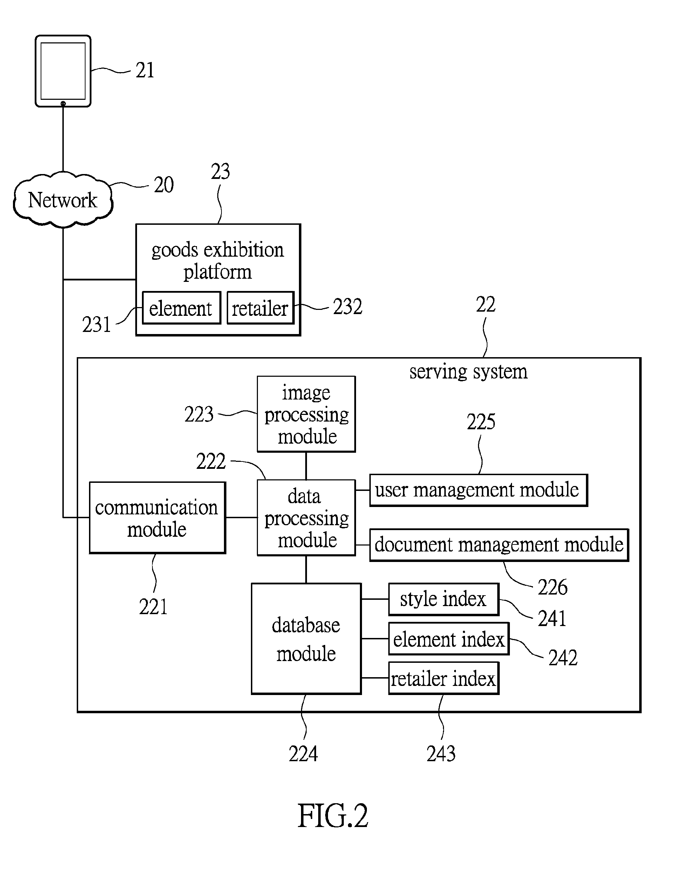

In Fig. 2, a schematic diagram for depicting the system is shown. A serving system 22, a terminal device 21, and a goods exhibition platform 23 are assembled to form the system for providing proposal of the furnishing decoration over network 20.

The terminal device 21 is such as a smart phone, tablet, or personal computer. The terminal device 21 is provided for the user to operate a program to access the system. The system allows the user to create his shopping list or preference list by his terminal device 21. The elements recorded in the list have the element identifiers. A matched style may be determined when the serving system 22 analyzes the data collected from the list. A proposal is therefore proposed. The smart phone or tablet is preferred device to select the elements by scanning or reading the electronic tag.

The mentioned goods exhibition platform 23 is such as a network shopping platform or the retailer's exhibition website. The goods exhibition platform 23 has a database recording the information relating to elements 231 with element identifiers, and retailers 232. The information is stored in the database in form of lists or categories. The user may find out the preferred elements by keyword searching or category searching. In an exemplary example of a web-based platform interface, the every element 231 has unique tag or bar code which allows the user to create his preferred list. The list is then transmitted to the serving system 22.

The main function modules in the serving system 22 are shown in the schematic diagram. The communication module 221 establishes a connection with the network 20. The user accesses the serving system 22 via the communication module 221. The system 22 receives the selection signal made by the terminal device 21. A data processing module 222 in the serving system 22 is a software-based function module used for data processing, analysis, and determination. The data processing module 222 is coupled with the communication module 221 and database module 224. The data processing module 222 is used to process the selection signal transmitted from the terminal device 21. When the serving system 22 obtains the selection signal specifying one or more elements, the data processing module 222 analyzes the combination of elements for in comparison determining a style type. A proposal of furnishing decoration with the advice of recordation, arrangement, and the composite image is therefore decided based on the determination of style type by means of software. The proposal is finally transmitted to the terminal device 21.

The serving system 22 further includes an image processing module 223 which is used to process the image signals for the variety of furnishing elements. When the system 22 determines a style type, the image processing module 223 combines the elements into a composite image. This image renders a picture included in the proposal. The proposal therefore includes one or in combination of advice of decoration, arrangement, and composite image.

Further, a user management module 225 allows the system 22 to establish the database indexed with the user data. When the system retrieves the user's preference and history file, the system 22 may provide more accurate advice of decoration, arrangement, and composite image in the proposal. In the serving system 22, a document management module 226 manages the templates involving the advice of decoration, arrangement, and composite image. The templates allow the system to produce the proposal having the advice of decoration, arrangement, and composite image when the closest style type is determined based on the combination of the selected elements.

A database module 224 renders the database recording the information relating to elements, images, descriptions, element identifiers, categories, retailers, and designers. The database module 224 also performs comparison based on the database. The every data recorded in the database is indexed, and the indexes are provided as references for the user to do search. The database exemplarily records the information relating to the elements, images, descriptions, identifiers for elements, categories of elements, retailers, and designers. The every record has its index used to be searchable item. The index is preferably correlated with a specific style type. The indexes in the database are exemplarily the shown style index 241, element index 242, and retailer index 243. The correlations between the indexes and the indexed items are provided for the system to actually determine a style type with respect to the user's selection. Since the well-established indexes in the database, the system is able to provide more than one proposal with respect to the style type.

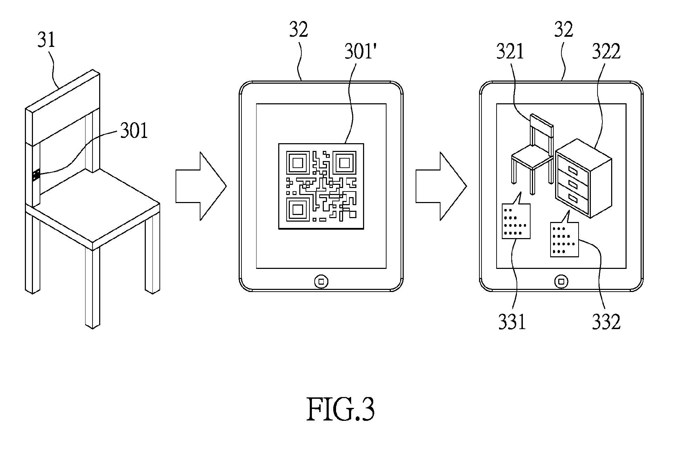

Fig. 3 shows a schematic diagram depicting the system for providing proposal of furnishing decoration in one embodiment of the present invention. Besides the user can select element on the shopping platform, the system of the present embodiment also allows the user to make selection of an element by scanning the bar code or reading the electronic tag on the element in a store or shop. In addition, the system allows the user can upload the image captured by a mobile device to the serving system. The serving system then recognizes the element through the image uploaded from the mobile device.

In the diagram, a furnishing element 31 is schematically shown. An identification tag such as a QR code is pasted up on the furnishing element 31. The user may manipulate the terminal device 32 to scan the identification tag 301 using a scanning program when he looks at the furnishing in an exhibit place. For example, an identification tag 301' scanned from the identification tag 301 on the furnishing is displayed on the terminal device 32. The selection is done when the identification tag 301' is generated on the terminal device 32. The user may therefore obtain the information relating to the selected element according to the information carried in the tag. Further, through the program, the user can continuously select other one or more elements. As shown in the diagram, several furnishings 321, 322 are selected by the terminal device 32, and also the element descriptions 331, 332 for the furnishings 321, 322 can be obtained. The serving system may provide the proposal using an image to describe the advice of decoration, arrangement, and composite image. The diagram shows the furnishings 321, 322 and the related descriptions 331, 332.

The system in the disclosure provides the proposal of furnishing decoration not only it's responding to one or more elements selected by the user, but also providing a platform for searching goods. The inside database records the information relating to various furnishings, descriptions for furnishings, prices, discount, designer and related style, provider and/or sales agent, and also to the goods of style.

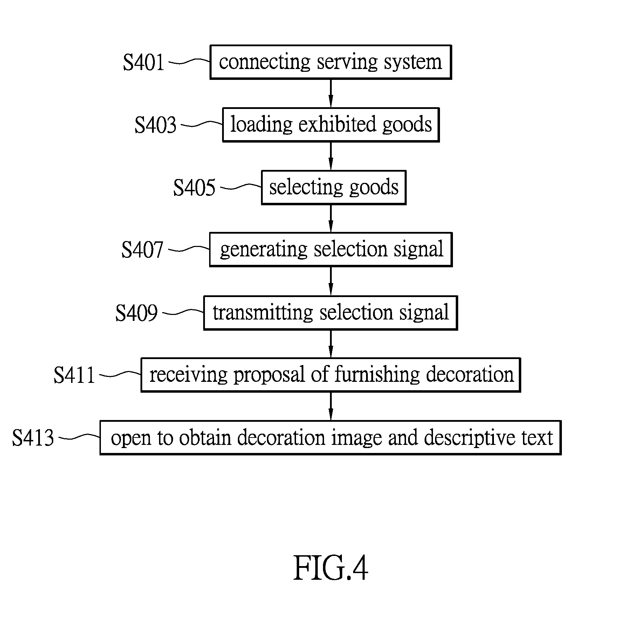

The process applied to the system for providing the proposal of furnishing decoration is described in the flow chart of Fig. 4. It is noted that this process is aiming at the steps performed by an application program in the terminal device.

In the beginning of step S401, the terminal device is communicated with a serving system by the device's communication module. The serving system initiates a user interface provided for the user entering the system, and loading exhibited goods, such as in step S403.

After that, the user makes a selection of goods by means of a menu, a search interface, scanning bar-code, reading electronic-tag, or capturing a picture enabled in the terminal device, such as in step S405. Therefore selection signals are generated from the terminal device, such as in step S407. A list is created. The list carrying various selection signals is transmitted to the serving system, such as in step S409. In the meantime, the serving system analyzes the selection signals are obtains the information of the goods as comparing with a database. The goods are such as the furnishing elements. Through analysis and comparison, one or more style types in compliance with, or close to, the property integrating the selected elements. The system may provide not only one proposal. The proposal records the advice or decoration, arrangement, and/or composite image. The proposal may include the description relating to the style type with respect to the combination of elements. The composite image combining the elements in one picture may also be attached with the proposal. Furthermore, the proposal may include recommendation of involving other goods for meeting one specific style type.

Next, in step S411, the terminal device receives a proposal of furnishing decoration from the serving system. The user may use the application program to expand the proposal. The image or descriptive text depicting the furnishing decoration and/or arrangement in the proposal helps the user to put up decoration in an exemplary example, such as in S413.

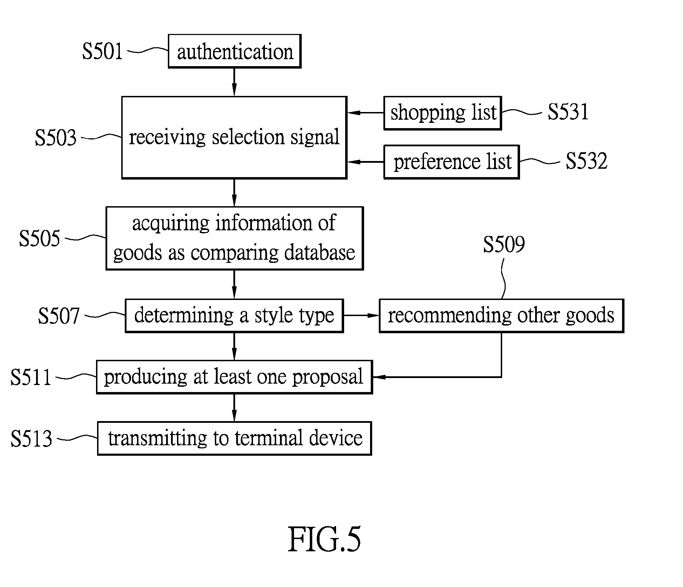

The flow chart in Fig. 5 describes the process performed in the serving system.

When the system receives the selection signal made by a terminal device, the system may activate a user management module to verify the user. In the beginning of the process, the serving system needs to perform safety verification (step S501). The verification is based on the information sent from the terminal device. Next, in step S503, the system receives a selection signal. The selection signal is made by the user as selecting element(s) through a goods exhibition platform. The selection signal may be included in a list transmitted to the serving system. The list is such as a shopping list 531 or preference list 532 created according to the user's selection. The shopping list 531 or the preference list 532 includes one or more element identifiers. The system performs comparison using a database according to the selection of one or more goods or elements recorded in the selection signal. The selection signal may carry the element identifier(s) which is referred to perform the comparison using the database. The goods are such as the furnishing element for decoration, such as step S505.

In next step S507, when the serving system gets the information of goods as comparing with the database based on the user's selection. The user's preference can be determined based on the selection so as to form customized data such as the preferred style, the furnishing(s) associated with this style, and the arrangement or designer matching the style. The system may provide options for the user to make selection. The customized data includes the every furnishing to be selected, description, and related arrangement, which may be displayed on the terminal device. The data may also include price, position, location, discount of every piece of furnishing. The system also provides the information and interface for the user to process an order of the elements.

By comprehensively integrating the information such as combination of one or more goods or elements, the system determines a style type specified to the user as it is associated with the elements. It is noted that, one element may be categorized into more than one class and may correlate more than one style type. Therefore, more elements in the combination can be acquired by the system, and the narrower scope of the style type to be determined can be obtained. However, when a large number of elements are provided to the system, the system may hardly give the accurate answer of the style type specified to the user. No matter what the various cases are, the system still provides one or closer style types and proposals for the requester according to the correlations of the elements and the types. In next step S511, the system provides one or more proposals being determined based on the submitted style type(s). The proposal may be related to the advice of decoration, arrangement, and/or a composite image. Further, the proposal may include some images, or descriptive text. Then the terminal device receives the at least one proposal, such as step S513.

It is noted that, when the style type is determined particularly based on the user's selection, every style type may still correlate the other non-selected elements, exemplarily including other goods, such as the furnishings. In this case, the system may render recommendations attached to the delivered proposal(s) when the recommended style type still correlates other non-selected elements. Such as in step S509, the system may actively recommend elements of other goods for the user to make a further selection. This measure allows the serving system to provide a complete solution for specifically meeting a preferred style.

Thus, through the system and method for providing proposal of furnishing decoration, the customer or any user may conveniently receive the proposal when he/she selects the elements such as furnishings, accessories, etc. Especially the system acts as an agent recommending at least one style type for the customer or user based on his/her selection with his/her wish. The customer or user can put up decoration according to the received proposal.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A method for providing proposal of furnishing decoration, comprising:
in a serving system (22), receiving a selection signal transmitted from a terminal device (21);
obtaining information relating to one or more elements (231) as comparing with a database (102) according to the selection signal carrying the selection signal;
determining at least one style type according to single or in combination of the one or more elements (231);
based on the determination of the at least one style type, determining at least one proposal including one or in combination of advice of decoration, arrangement, and a composite image; and
transmitting the at least one proposal to the terminal device (21).

2. The method of claim 1, wherein the serving system (22) has a user management module (225) used to authenticate a user before the serving system (22) receives the selection signal.

3. The method of claim 1, wherein the selection signal includes a shopping list or a preference list created by a user using the terminal device (21).

4. The method of claim 3, wherein the shopping list or the preference list is created according to the elements selected through a goods exhibition platform (23).

5. The method of claim 3, wherein the shopping list or the preference list includes one or more element identifiers.

6. The method of claim 1, wherein, other non-selected elements in accordance with one style type is recommended attached to the at least one proposal provided by the serving system (22).

7. The method of anyone of claims 1 through 6, wherein the proposal further includes a diagram showing the arrangement of the elements (231) and descriptive text.

8. A system performing the method for providing proposal of furnishing decoration recited in claim 1, wherein the system comprises:
a goods exhibition platform (23), providing a plurality of elements (231) and data relating to the elements (231), provided for the terminal device (21) to select one or more elements (231) over network (20), and create a shopping list or a preference list;
a serving system (22), comprising:
a communication module (221), providing the terminal device (21) to access the serving system (22), used to receive the selection signal transmitted from the terminal device (21), including the shopping list or the preference list;
a database module (224), used to compare with a database for obtaining element data with respect to the selection signal; wherein the database module (224) includes indexes associated with styles, elements, and retailers (241, 242, 243); and
a data processing module (222), coupled with the communication module (221) and the database module (224), used to process the selection signal made by the terminal device (21) so as to obtain selected one or more elements (231) carried in the selection signal; determine at least one style type in accordance with one or in combination of the one or more elements (231); determine at least one style type for the one or in combination of the elements (231); and decide at least one proposal including decoration advice, arrangement, and a composite image according to the at least one style type; the at least one proposal is transmitted to the terminal device (21).

9. The system of claim 8, wherein the shopping list or the preference list includes one or more element identifiers; every identifier is retrieved from the goods exhibition platform (23) using the terminal device (21).
